# EUROPEAN PATENT SPECIFICATION

(11) **EP 2 807 762 B1**
(45) Date of publication and mention of the grant of the patent: **30.12.2020**
(21) Application number: 13740679.9
(22) Date of filing: 25.01.2013
(51) Int. Cl.: H04L 5/00, H04L 1/00, H04W 72/04, H04L 1/18

(54) **METHOD AND SYSTEM FOR PROVIDING SERVICE IN A WIRELESS COMMUNICATION SYSTEM**
VERFAHREN UND SYSTEM ZUR BEREITSTELLUNG EINES DIENSTES IN EINEM DRAHTLOSEN KOMMUNIKATIONSSYSTEM
PROCÉDÉ ET SYSTÈME POUR FOURNIR UN SERVICE DANS UN SYSTÈME DE COMMUNICATION SANS FIL

(30) Priority: 27.01.2012 KR 20120008455
(43) Date of publication of application: 03.12.2014
(73) Proprietor: Samsung Electronics Co., Ltd., Suwon-si, Gyeonggi-do 443-742 (KR)
(72) Inventor: TAORI, Rakesh, Gyeonggi-do 443-742 (KR); KIM, Yung-Soo, Gyeonggi-do 443-742 (KR); JUNG, Jung-Soo, Gyeonggi-do 443-742 (KR)
(74) Representative: Nederlandsch Octrooibureau
(86) International application number: PCT/KR2013/000639
(87) International publication number: WO 2013/112008

(56) References cited:
- EP-A1- 2 306 769
- EP-A1- 2 306 769
- EP-A1- 2 408 245
- EP-A1- 2 408 245
- WO-A1-2010/124647
- WO-A1-2011/156769
- US-A1- 2008 132 262
- US-A1- 2009 111 473
- US-A1- 2012 021 738
- US-A1- 2012 021 738

## Description

### Technical Field

The present invention relates to a method and system for providing services in a wireless communication system.

### Background Art

To support high-capacity data services, next-generation wireless communication systems use high-frequency bands such as, for example, millimeter waves (mmWave). In the case of the systems using such high-frequency bands, Base Stations (BSs) have a small cell radius due to the short communication-enabled distances between Subscriber Stations (SSs) and the BSs. In turn, such a small cell radius causes an increase in the number of BSs installed to secure sufficient coverage for the SSs. When the mobility of the SSs is considered, the reduction in cell radius of BSs and the increase in the number of BSs may lead to an increase in the number of inter-cell handovers of SSs. As such, the overhead of the system may increase due to the increased number of SS handovers.

Therefore, practical measures are required to provide more efficient services to users considering the characteristics of high-frequency bands to be used in the next-generation wireless communication system.

US2012/0021738 relates to a method for setting a control multi point of a serving cell in a wireless communication system. The serving cell selects more than one adjacent base station as a control multi point set based on first link information between terminals and the adjacent base stations received from the terminals.

EP2408245 relates to a method and device for allocating same resource for a plurality of eNBs of collaborative Multiple-input-Multiple-output (MIMO). Wherein a serving eNB firstly determines, in the one or more other eNBs, at least one candidate eNB recommended to cooperate with the serving eNB, according to measurement report reported by mobile stations or according to report information of the recommended candidate eNB reported by mobile station, then obtains resource related information of the at least one candidate eNB, then determines one or more collaborative eNBs from the at least one candidate eNB according to the resource related information, and

allocates corresponding communication resources for the serving eNB and the one or more collaborative eNBs.

EP 2306769 relates to a method of operating a plurality of base stations of a wireless communication network as transmission stations for a wireless downlink communication connection with a wireless appliance. A first base station of the plurality of base stations controls the wireless connection of the wireless appliance. According to the method a first base station sends a first signal to at least one second base station, which is also part of the plurality of base stations of the wireless communication network. The first signal is indicative of an identifier of the wireless appliance, further physical layer related information identifying the time, frequency, modulation and coding of the measurement report transmission and of a measurement configuration of the wireless appliance.

WO2011/156769 discloses a wireless transmit/receive unit (WTRU) that may transmit data via multiple component carriers associated with multiple eNode-Bs. The WTRU may receive a handover request message from a source eNode-B. While maintaining a connection with a component carrier on the source eNode-B, the WTRU may establish a connection with another component carrier on a target eNode-B.

WO2010/124647 discloses a communication control device, a communication control method and the system thereof, which provide efficient multi-base station joint services in a mobile communication system using dynamic clustering. Optimal base station clustering is chosen according to the communication state between a terminal and each base station, and the signaling and resources cost for calculating a base station clustering is reduced. The communication control device connects with multiple base stations through a network, and clusters the multiple base stations dynamically so that the clustered multiple base stations can provide services for the mobile terminal in union.

### Disclosure

### Technical Problem

The above information is presented as background information only to assist with an understanding of the present disclosure. No determination has been made, and no assertion is made, as to whether any of the above might be applicable as prior art with regard to the present invention.

### Solution to Problem

Aspects of the present invention are to address at least the above-mentioned problems and/or disadvantages and to provide at least the advantages described below. Accordingly, aspects of the present invention relate to providing services in the next-generation wireless communication system. These aspects are provided in the independent claims. Preferred embodiments are provided in the dependent claims.

More precisely, in accordance with an aspect of the present invention, a method is provided according to claim 1 and further detailed in the dependent claims referring back to this claim.

In accordance with another aspect of the present invention, a method is provided according to claim 5 and further detailed in the dependent claims referring back to this claim.

In accordance with further another aspect of the present invention, a master base station, BS, is provided according to claim 8.

In accordance with yet another aspect of the present invention, a member base station, BS, is provided according to claim 9.

The scope of the present invention is determined only by the scope of the appended claims.

Any embodiment/aspect (of the invention/disclosure) referred to in this description and not fully falling within the scope of said appended claims is an example useful for understanding the present invention.

### Brief Description of Drawings

The above and other aspects, features and advantages will be more apparent from the following description taken in conjunction with the accompanying drawings, in which:
FIG. 1 illustrates a configuration of a cloud cell according to a first exemplary embodiment of the present invention;
FIG. 2 is a flow diagram illustrating a data transmission/reception operation in a cloud cell according to the first exemplary embodiment of the present invention;
FIG. 3 is a flowchart illustrating a master Base Station's (BS's) operation of controlling data transmission to a Subscriber Station (SS) in a cloud cell according to the first exemplary embodiment of the present invention;
FIG. 4 is a flowchart illustrating an operation of an SS in a cloud cell according to the first exemplary embodiment of the present invention;
FIG. 5 is a flowchart illustrating an operation of a slave BS according to the first exemplary embodiment of the present invention;
FIG. 6 is a flow diagram illustrating an operation of changing a master BS according to a second exemplary embodiment of the present invention
FIG. 7 is a flowchart illustrating a current master BS's operation of changing a master BS in a cloud cell according to the second exemplary embodiment of the present invention;
FIG. 8 is a flowchart illustrating an operation of a slave BS changed to a master BS in a cloud cell according to the second exemplary embodiment of the present invention and
FIG. 9 illustrates a schematic structure of an apparatus according to an exemplary embodiment of the present invention.

Throughout the drawings, the same drawing reference numerals will be understood to refer to the same elements, features and structures.

### Best Mode for Carrying out the Invention

The following description with reference to the accompanying drawings is provided to assist in a comprehensive understanding of exemplary embodiments. It includes various specific details to assist in that understanding but these are to be regarded as merely exemplary. Accordingly, those of ordinary skill in the art will recognize that the invention is defined by the appended claims.

It is to be understood that the singular forms "a," "an," and "the"include plural referents unless the context clearly dictates otherwise. Thus, for example, reference to "a component surface" includes reference to one or more of such surfaces.

Exemplary embodiments of the present invention propose a cloud cell designed to provide more efficient services to users considering the characteristics of high-frequency bands to be used in the next-generation wireless communication system. Notably, exemplary embodiments of the present invention can also be applied to regular cellular bands where hyper-dense deployments with small Base Station (BS) coverage are used. The cloud cell defined in this specification is a virtual cell including a plurality of BSs (hereinafter referred to as 'member BSs') providing services to one Subscriber Station (SS), and the BSs operate in mmWave bands.Again however, the invention may be applied to communication systems using any cellular band.

An exemplary cloud cell proposed by the present invention has the following configuration.

At network entry, an SS may enter a beamformed system by attaching to one BS, and may later connect to multiple BSs. The BS that the SS first accesses operates as a master BS (or a main BS) of a virtually configured cloud cell to provide a service to the SS.

The master BS is one of the member BSs, and controls operations of the remaining member BSs in the cloud cell. Among the member BSs, the remaining member BSs except for the master BS operate as slave BSs (or secondary BSs). A slave BS in a first cloud cell may operate as a master BS or a slave BS in at least one other cloud cell except for the first cloud cell (i.e., a cloud cell has only one Master BS). Similarly, a master BS operating as a master BS in a first cloud cell may also operate as a master BS or a slave BS in at least one other cloud cell except for the first cloud cell.

Member BSs in one cloud cell may be physically connected to each other in a wired or wireless manner.

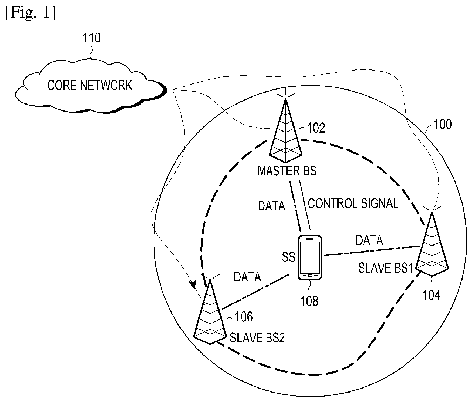

FIG. 1 illustrates a configuration of a cloud cell according to a first exemplary embodiment of the present invention.

Referring to FIG. 1, a cloud cell 100 includes an SS 108, and for example, three member BSs 102, 104 and 106 transmitting data to the SS 108. In the illustrated example of FIG. 1, the number of member BSs constituting the cloud cell 100 is three. However, this is merely for convenience of description, and it will be noted that the number of member BSs constituting the cloud cell is subject to change. In the illustrated example of FIG. 1, the member BS 102 operates as the master BS, while the member BS 104 and the member BS 106 each operate as a slave BS.

The master BS 102 may transmit both control signals and data to the SS 108, and manages the slave BS1 104 and the slave BS2 106.

Each of the slave BS1 104 and the slave BS2 106 may transmit only data to the SS 108 without transmitting control signals, unless it receives a specific instruction from the master BS 102. The slave BS1 104 and the slave BS2 106 may also transmit control information to the SS 108 depending on an instructionof the master BS 102. The data that the master BS 102 transmits to the SS 108 may be equal to or different from the data that the slave BS1 104 and the slave BS2 106 transmit to the SS 108.

The master BS 102, the slave BS1 104, and the slave BS2 106 are each directly connected to a core network 110. Also, the master BS 102, the slave BS1 104, and the slave BS2 106 may be directly connected to each other in a wired or wireless manner.

All of the master BS 102, the slave BS1 104, and the slave BS2 106 may serve the SS 108, thereby increasing reliabilityin that at least one or more of the multiple links may have sufficient quality to support higher data rates. Also, the master BS 102, the slave BS1 104, and the slave BS2 106 may provide one or multiple links having improved signal quality to the SS 108, thereby increasing data throughput. The cloud cell 100 is configured to provide high-speed data services to the SS 108, and it will be apparent to those of ordinary skill in the art that the cloud cell 100 is beneficial in providing increased throughput and reliabilityeven though the SS 108 is not located at the edge of the cell.

In the cloud cell 100, the master BS 102, the slave BS1 104, and the slave BS2 106 may transmit data to the SS 108 simultaneously or at different times. Similarly, the SS 108 may transmit data to the master BS 102, the slave BS1 104, and the slave BS2 106 simultaneously or at different times. To this end, the SS 108 may include multiple Radio Frequency (RF) chains for communication with multiple BSs. However, the SS 108 does not necessarily require multiple RF chains to communicate with different BSs. For example, when using one RF chain, the SS 108 may exchange data with the BSs 102, 104 and 106 at different times. The cloud cell 100 may reconfigure or updateits member BSs depending on the communication state between the SS 108 and the BSs. More specifically, a certain BS may be excluded from the cloud cell 100 if there is a sustained low quality communication link with the SS 108 (i.e., low signal quality, lager latencies in packet delivery/reception, etc.).

In the first exemplary embodiment of the present invention, roles of member BSs and an SS will be described in more detail based on the operation of transmitting data to the SS in a cloud cell.

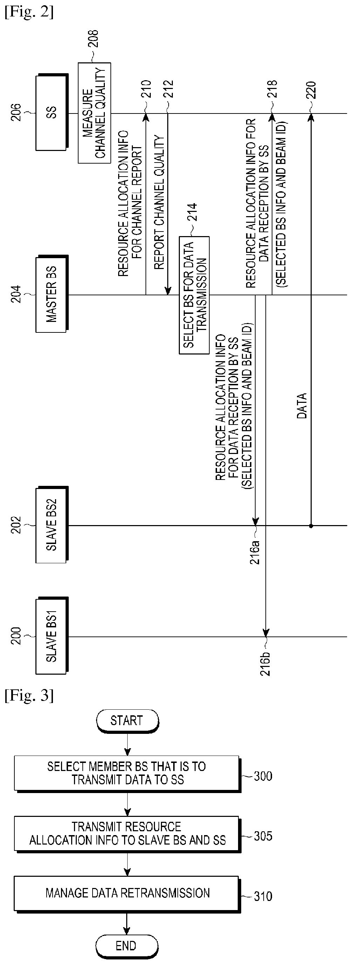

FIG. 2 is a flow diagram illustrating a data transmission/reception operation in a cloud cell according to the first exemplary embodiment of the present invention. In the following description, the number of member BSs constituting the cloud cell is assumed to be three. However, it is to be understood that this is merely for convenience of description, and it should be noted that the number of member BSs constituting the cloud cell can change.

Referring to FIG. 2, a cloud cell is considered, which includes member BSs (i.e., a master BS 204, a slave BS1 200, and a slave BS2 202) serving an SS 206. The basic configuration and operation of the cloud cell are substantially the same as described in FIG. 1. In step 208, the SS 206 measures channel qualities for nearby BSs. The nearby BSs include not only member BSs in the cloud cell, but also BSs other than the member BSs. The SS 206 measures channel qualities of the member BSs at predefined regularperiods or aperiodically, and measures channel qualities for BSs other than the member BSs at intervals of a period longer than the stated period or at stated periods. For example, the channel qualities include Physical Cell Identities (PCIDs) for BSs from which the SS can receive data, and Received Signal Strength Indication (RSSI)/Carrier to Interference plus Noise Ratio (CINR) for each PCID. The PCID and RSSI/CINR represent examples of an ID and channel quality information of each BS. However, it is to be understood that this is merely for convenience of description. That is, in the present invention, various types of BS IDs and channel quality information may be used.

In step 210, the master BS 204 allocates resources for a channel report by the SS 206, and transmits the resource allocation information. In step 212, the SS 206 transmits a channel quality report to the master BS 204 using resourcescorresponding to the resource allocation information. For example, the channel quality report may include channel quality values (i.e., PCIDs and RSSI/CINR for each PCID) that the SS 206 has measured from the nearby BSs, the best transmit/receive beam direction, and the like. The best transmit/receive beam directionrefers to a transmit/receive beam direction having the optimal or highest channel quality or the maximum signal strength in the system to which beamforming is applied.

Upon receiving the channel quality report from the SS 206, the master BS 204 determines a member BS that will transmit data to the SS 206, based on the channel quality values included in the channel quality report, in step 214. After allocating resources for data reception by the SS 206, the master BS 204 transmits resource allocation information for data reception by the SS 206 to the slave BS1 200 and the slave BS2 202 in steps 216b and 216a, respectively.

In step 218, the master BS 204 transmits resource allocation information for data reception by the SS 206, to the SS 206. For example, the resource allocation information for data reception by the SS 206 may include information about a selected BS and beam ID indicating the optimal beam direction. Through steps 216a and 216b, the member BSs included in the cloud cell may acquire information about a slave BS (for example, the slave BS2 202) that will transmit data to the SS 206, thereby making it possible to avoid transmission by other member BSs during data transmission, contributing to minimization of interference. Although it is assumed in the example of FIG. 2 that one slave BS (for example, the slave BS2 202) is selected as a BS that will transmit data, multiple slave BSs (for example, the slave BS1 200 and the slave BS2 202) may all be selected as BSs that will transmit data.

Thereafter, the slave BS2 202, which has recognized that the slave BS2 202 itself is a selected BS, based on the BS information acquired from the resource allocation information for data reception by the SS 206, transmits data to the SS 206 in step 220.

Although not shown in the drawing, the data mentioned above is the data that the slave BS2 202 has received via the master BS 204. The master BS 204 receives the results on data transmission by the selected slave BSs from the SS 206 in the form of, for example, an ACK/NACK signal. If there is data for which a NACK signal has occurred, the master BS 204 may manage retransmission of the NACKed data, which may not necessarily be through the same BS that transmitted the original data.

FIG. 3 is a flowchart illustrating a master BS's operation of controlling data transmission to an SS in a cloud cell according to the first exemplary embodiment of the present invention.

In the following description, it is assumed that the master BS transmitted resource allocation information for a channel quality report by the SS, to the SS, and has received channel quality reports from the SS through resources corresponding to the resource allocation information. The channel quality reports received from the SS may include channel quality reports for the BSs, whose channel qualities can be measured by the SS, as well as for the member BSs in the cloud cell.

Referring to FIG. 3, in step 300, the master BS selects a member BS that will transmit data to the SS, based on one of the channel quality values, load, remaining power (in case of energy harvesting BS), whether a BS is backhauled to the network or not, etc. acquired from the channel quality report received from the SS. The channel quality report includes PCIDs for nearby BSs whose channel qualities are measured by the SS, RSSI/CINR for each PCID, and the best transmit beam direction. As an example, the master BS determines a BS having the best RSSI/CINR among the RSSI/ CINR values included in the channel quality report, as a BS that will transmit data to the SS.

In step 305, the master BS transmits resource allocation information, for data transmission to the SS, to each of the slave BSs and the SS. For example, the resource allocation information includes information about the selected BS, and an ID of the beam providing the optimal channel quality.

In step 310, the master BS receives the reception results for the data transmission by the selected slave BS from the SS in the form of, for example, an ACK/NACK signal. The master BS manages retransmission for the data for which a NACK signal has occurred, based on the reception results. For example, if the number of occurrences of a NACK signal exceeds a threshold as an arbitrary slave BS continuously generates the NACK signal, the master BS may determine another slave BS other than the current slave BS, as a BS that will transmit data to the SS.

More specifically, the master BS may determine whether to maintain the current member BSs of the cloud cell based on the reception results for the data transmission by the member BSs, received from the SS. For example, for an arbitrary slave BS, if the number of occurrences of a NACK signal exceeds a threshold, the master BS may exclude the slave BS that generated the NACK signal from the member BSs in the cloud cell. The master BS may determine a BS having the highest channel quality value as a new member BS, based on the channel quality values for the BSs other than the member BSs included in the channel quality report received from the SS.

Although not shown in the drawing, the master BS delivers the current configuration information for the cloud cell to the network, form ulticast communication from the network to the member BSs. The configuration information includes, for example, an ID of the cloud cell, and an ID and role information for each of member BSs of the cloud cell. The role information indicates whether a member BS operates as a master BS or a slave BS.

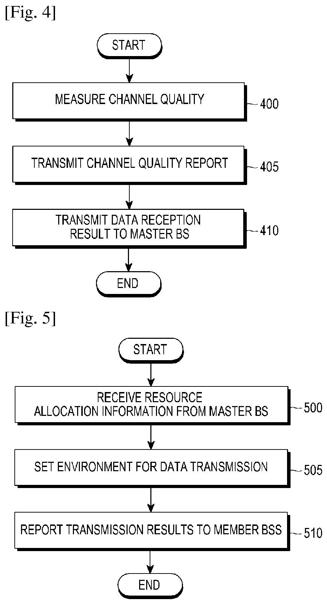

FIG. 4 is a flowchart illustrating an operationof an SS in a cloud cell according to the first exemplary embodiment of the present invention.

Referring to FIG. 4, the SS measures channel qualities for nearby BSs in step 400. The nearby BSs may include member BSs in the cloud cell, and may also include BSs other than the member BSs. For example, the SS measures channel qualities for the member BSs at stated periods or aperiodically, and may measure channel qualities for nearby BSs other than the member BSs at intervals of a period longer than the stated periodor at stated periods. For example, the channel qualities include a beam and a PCID for each of the member BSs in the cloud cell and other nearby BSs, and RSSI/ CINR for each PCID. Then, the SS determines the best transmit beam among the transmit beams of the member BSs in the cloud cell, and acquires timing information for the best transmit beam.

In step 405, the SS transmits a channel quality report including values of the measured channel qualities to the master BS using resources corresponding to the resource allocation information received from the master BS. For example, the channel quality report includes channel quality values (i.e., PCIDs for the nearby BSs, RSSI/ CINR for each PCID, and the best transmit beam direction) that the SS has measured for the nearby BSs.

Thereafter, in step 410, upon receiving data from an arbitrary BS, the SS determines reception results for the data and transmits the reception results to the master BS. For example, the reception results are represented for each member BS individually in the form of an ACK/NACK signal, and used by the master BS to determine whether to retransmit the data.

FIG. 5 is a flowchart illustrating an operation of a slave BS according to the first exemplary embodiment of the present invention. It is assumed herein that the slave BS is a BS that is determined by the master BS and will transmit data to an SS in the cloud cell.

Referring to FIG. 5, the slave BS receives resource allocation information from the master BS in step 500. Based on the BS information included in the resource allocation information, the slave BS recognizes that the slave BS itself is a BS that will transmit data to the SS. In step 505, the slave BS sets an environment for transmission of the data, and then transmits the data to the SS.For example, the slave BS determines a Modulation and Coding Scheme (MCS) level at a time for the transmission, considering channel quality values included in the channel quality report received from the master BS, and the data that is received from the master BS.

After transmitting the data, the slave BS transmits transmission results for the data to member BSs including the master BS, in step 510.

Operations of member BSs and an SS during a handover situation where the master BS in the cloud cell is changed will be described below according to a second exemplary embodiment of the present invention.

As for a cloud cell proposed in an exemplary embodiment of the present invention, if one SS accesses one BS by means of network entry in a system where beams are formed, the cloud cell is configured by virtually grouping BSs for providing services to the SS. More specifically, the BS that the SS initially accessed operates as a master BS of the cloud cell. Thereafter, the SS periodically measures channel qualities for the BSs from which it can receive data. The SS transmits a channel quality report including the measured channel qualities to the master BS. The master BS selects member BSs of the cloud cell based on the channel quality values included in the channel quality report, and provides information about the selected member BSs to the related BSs and the SS. For example, the master BS selects, as member BSs of the cloud cell, BSs having RSSI or CINR among the channel quality values, which is greater than or equal to a predetermined threshold.

Thereafter, if the selectionof member BSs of the cloud cell for the SS is completed, the master BS delivers the current configuration information of the cloud cell to the network. The configuration information includes, for example, an ID of the cloud cell, and IDs and role information for member BSs of the cloud cell. The role information indicates whether a member BS operates as a master BS or a slave BS. All of the member BSs may receive, from the network, the data that needs to be delivered to the SS. Upon receiving the data from the network, the master BS selects a slave BS that will transmit the data, based on the channel quality report received from the SS. The master BS instructs transmission of the data by delivering the data and resource allocation information for transmission of the data to the selected slave BS. The master BS receives reception results for the data from the SS.

The master BS receives the current load information of a BS from each of the slave BSs. Based on the load value included in the load information, the master BS determines whether to maintain each of the slave BSs as a member BS of the current cloud cell. For example, the master BS compares the current load value for each of the slave BSs with a threshold. If the current load information includes a load value exceeding the threshold, the master BS excludes the slave BSs that transmitted the current load information from the member BSs in the cloud cell. However, if the current load value is less than or equal to the threshold, the master BS maintains the slave BS that transmitted the current load information as a member BS.

Based on the channel quality information received from the SS, the master BS determines whether to change the master BS of the cloud cell, i.e., determines if a handover is necessary or otherwise advantageous. For example, the master BS determines to change the master BS of the cloud cellif it is determined that RSSI/CINR included in a channel quality report for an arbitrary BS, received from the SS, exceeds a threshold, the number of times that the RSSI/CINR exceeded the threshold is greater than or equal to a predetermined number, and the arbitrary BS is not overloaded. In such a case, the master BS changes the arbitrary BS to a master BS of the cloud cell. After the change, the master BS notifies the change results for the master BS to the SS and the changed master BS. The arbitrary BS may be one of the slave BSs in the cloud cell, or one of the other BSs from which the SS can receive data. For example, the change results include an action time defined by the master BS, and a transmit beam ID. The action time is configured in units of frames or subframes, and represents the time at which the changed master BS operates as a master BS. The transmit beam ID is used by the master BS to receive a control signal from the changed master BS.

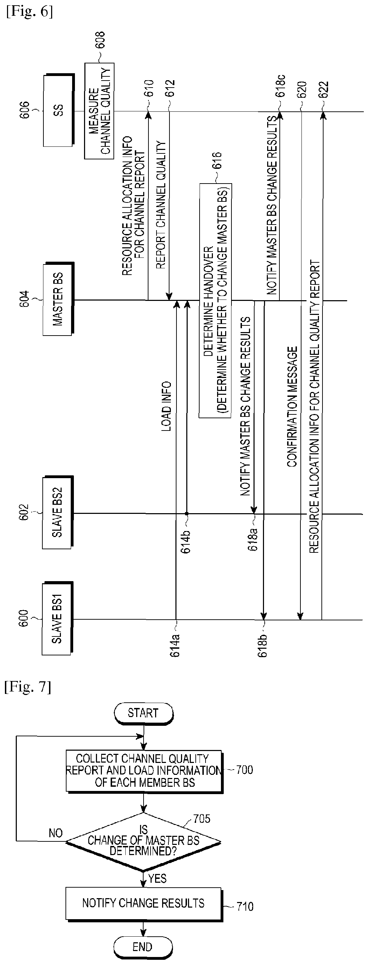

FIG. 6 is a flow diagram illustrating an operation of changing a master BS according to a second exemplary embodiment of the present invention. In the following description, the number of member BSs constituting the cloud cell is assumed to be three. However, it is to be understood that this is merely for convenience of description, and it should be noted that the number of member BSs constituting the cloud cell is subject to change.

Referring to FIG. 6, a cloud cell is considered, which includes member BSs (i.e., a master BS 604, a slave BS1 600, and a slave BS2 602) transmitting data to an SS 606. In step 608, the SS 606 measures channel qualities for nearby BSs. The nearby BSs include not only member BSs in the cloud cell, but also BSs other than the member BSs. The channel qualities include PCIDs for BSs from which the SS can receive data, and RSSI/CINR for each PCID.

In step 610, the master BS 604 transmits resource allocation information indicating resources allocated for a channel report by the SS 606. In step 612, the SS 606 transmits a channel quality report to the master BS 604 using resourcescorresponding to the resource allocation information. For example, the channel quality report includes PCIDs for the nearby BSs, RSSI/CINR for each PCID, and the best transmit beam direction. The slave BS1 600 and the slave BS2 602 transmit load information indicating their own load state to the master BS 604 in steps 614a and 614b, respectively. Although not shown in the drawing,the load information transmission operationin steps 614a and 614b may be performed if there is a request from the master BS 604, or may be performed in such a manner that the slave BS1 600 and the slave BS2 602 transmit load information periodically or aperiodically even though there is no request from the master BS 604.

In step 616, the master BS 604 determines whether to change the current master BS in the cloud cell, i.e., determines a handover. In this specification, the master BS before the change will be referred to as a current master BS, in order to distinguish it from a master BS that is changed after the handover.

The master BS 604 considers the load information received from each of the slave BS1 600 and the slave BS2 602 and the channel quality report received from the SS 606. For example, the master BS 604 determines whether there is a BS having RSSI/ CINR exceeding a threshold, among the RSSI/CINR values included in the channel quality report. If there is a specific BS having RSSI/CINR exceeding the threshold, the master BS 604 determines whether the number of times that the RSSI/CINR of the specific BS exceeded the threshold is greater than or equal to a predetermined number. The specific BS is assumed to be one of the member BSs. The master BS 604 determines to change the specific BS to a new master BS in the cloud cellif it is determined from the load information received from the specific BS that the BS is not in overload state. For example, the overload state may be determined according to whether the current load value included in the load information of the specific BS exceeds a threshold.

It will be assumed herein that the master BS 604 determines the slave BS1 600 as a master BS changed after handover.

The master BS 604 delivers a result notification indicating that the slave BS1 600 is changed to a master BS in the cloud cell, to each of the slave BS1 600 and the slave BS2 602 in steps 618b and 618a, respectively.

Similarly, in step 618c, the master BS 604 transmits the result notification to the SS 606. The result notification may include information about the BS changed to a master BS, and information about the time at which the changed BS starts operating as a master BS.

In step 620, the SS 606 sends a confirmation message for the result notification to the slave BS1 600, informing the slave BS1 600 that the SS 606 has recognized that the changed master BS is the slave BS1 600.

Upon receiving the confirmation message, the slave BS1 600 performs a master BS's operation of transmitting resource allocation information for a channel quality report to the SS 606 in step 622. More specifically, the slave BS1 600 operating as a master BS in the cloud cell operates as in FIG. 3 of the first exemplary embodiment and in FIG. 7 of the second exemplary embodiment.

FIG. 7 is a flowchart illustrating a current master BS's operation of changing a master BS in a cloud cell according to the second exemplary embodiment of the present invention. In this specification, the master BS before the change will be referred to as a current master BS, in order to distinguish it from a master BS that is changed after the handover.

Referring to FIG. 7, in step 700, the current master BS collects a channel quality report received from an SS and the current load information received from each member BS. The channel quality report includes PCIDs for nearby BSs of the SS, and RSSI/CINR for each PCID, and the nearby BSs include the member BSs and other BSs.

In step 705, the current master BS determines whether to change the current master BS of the cloud cell, based on the channel quality report and the current load information. For example, the current master BS determines whether there is a BS having RSSI/CINR exceeding a threshold, among the RSSI/CINR values included in the channel quality report. It will be assumed that there is a specific BS having RSSI/ CINR exceeding the threshold. The specific BS may be any one of the member BSs in the cloud cell and the other BSs. Herein, the specific BS is assumed to be one of the member BS, and the current master BS determines whether the number of times that the RSSI/CINR of the specific BS exceeded the threshold is greater than or equal to a predetermined number. If the number of times is also greater than or equal to the predetermined number, the current master BS determines the current load information of the specific BS. Specifically, the current master BS acquires the current load value of the specific BS from the current load information. The current master BS determines whether the specific BS is in overload state by determining whether the current load value exceeds a threshold. If the specific BS is not in overload state, the current master BS determines to change the specific BS to a master BS in the cloud cell.

In step 710, the current master BS transmits a result notification indicating that the master BS in the cloud cell is changed to the specific BS, to each of the SS and the slave BSs. The change result notification may include information about the changed specific BS, and information (hereinafter, operation time information) about the time at which the specific BS starts operating as a master BS.

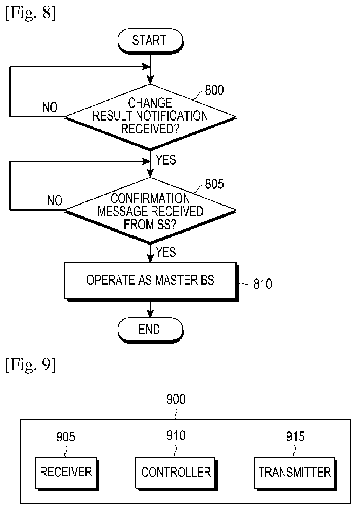

FIG. 8 is a flowchart illustratingan operation of a slave BS changed to a master BS in a cloud cell according to the second exemplary embodiment of the present invention.

Referring to FIG. 8, the slave BS determines in step 800 whether a result notification has been received from the master BS. If the result notification has not been received, the slave BS in the cloud cell operates under control of the master BS. More specifically, the slave BS waits to receive the result notification, operating as a slave BS that operates under control of the current master BS as in FIG. 5.

Upon receiving the result notification, the slave BS determines its own ID based on BS information included in the result notification, and recognizes the time at which it starts operating as a master BS, based on the operation time information acquired from the result notification. In step 805, the slave BS waits to receive a confirmation message from the SS. The confirmation message indicates that the SS has recognized that the slave BS is changed to a master BS in the cloud cell.

In step 810, the slave BS operates as a master BS in the cloud cell at the time corresponding to the operation time information. Specifically, the slave BS controls data transmission to the SS in the cloud cell, and determines handover. In other words, the slave BS operates as in FIG. 4 for the first exemplary embodiment and in FIG. 7 for the second exemplary embodiment.

FIG. 9 illustrates a schematic structure of an apparatus according to exemplary embodiments of the present invention.

Referring to FIG. 9, the apparatus 900 includes a receiver 905, a controller 910 and a transmitter 915, and may operate as an SS, a slave BS or a master BS according to exemplary embodiments of the present invention as described above.

First, reference will be made to the apparatus 900 that operates as a master BS according to the first exemplary embodiment of the present invention.

In this case, the controller 910 allocates resources for a channel quality report by an SS and controls the transmitter 915 to transmit resource allocation information for the resource allocation to the SS. The receiver 905 receives a channel quality report from the SS. The channel quality report includes channel quality values (i.e., PCIDs for the nearby BSs, RSSI/CINR for each PCID, and the best transmit beam direction) that the SS has measured for the nearby BSs. The controller 910 may determine a BS having the best RSSI/CINR,among RSSI/CINR values included in the channel quality report, as a BS that will transmit data to the SS. Further, the controller 910 controls the transmitter 915 to transmit resource allocation information, for data transmission to the SS, to the SS and slave BSs. The resource allocation information includes information about the selected BS and an ID of the best transmit beam. Upon receiving reception results for the data from the SS, the controller 910 determines whether to retransmit the data and whether to maintain the current configuration of the cell cloud, based on the reception results. A description thereof has been made in conjunction with FIG. 3.

The transmitter 915 delivers the current configuration information for the cloud cell to the network, for multicast communication from the network to the member BSs. The configuration information includes, for example, an ID of the cloud cell, and IDs and role information of the member BSs in the cloud cell. The role information indicates whether a member BS operates as a master BS or a slave BS.

Next, reference will be made to the apparatus 900 that operates as a slave BS according to the first exemplary embodiment of the present invention.

In this case, if the receiver 905 receives resource allocation information from the master BS, the controller 910 recognizes that the apparatus 900 itself is a BS that will transmit data to the SS, by determining its own ID included in the resource allocation information. Then, the controller 910 determines an environment (for example, an MCS level) for transmission of the data, and controls the transmitter 915 to transmit the data received from the master BS to the SS. If the transmitter 915 transmits the data, the controller 910 notifies the transmission results for the data to the member BSs including the master BS.

In the case where the apparatus900 operates as an SS according to the first exemplary embodiment of the present invention, the controller 910 may measure channel qualities for the nearby BSs and generate a channel quality report based thereon. The controller 910 delivers the channel quality report to the master BS by means of the transmitter 915. The nearby BSs include member BSs in the cloud cell and BSs other than the member BSs. The SS measures channel qualitiesof the member BSs at stated periods, and measures channel qualities for the BSs other than the member BSs at intervals of a period longer than the stated period. The channel qualities include beams and PCIDs for the member BSs in the cloud cell and the other BSs, and RSSI/CINR for each PCID. The SS determines the best transmit beam among the transmit beams of the member BSs in the cloud cell, and acquires time information for the best transmit beam. The channel quality report includes PCIDs for the BSs from which the SS can receive data, RSSI/CINR for each PCID, and the best transmit beam direction.

Thereafter, if the receiver 905 receives data, the controller 910 delivers the reception results for the data to the master BS in the form of an ACK/NACK signal.

Next, reference will be made to the apparatus 900 that operates as a master BS according to the second exemplary embodiment of the present invention.

In this case, the controller 910 collects a channel quality report that the receiver 905 receives from the SS, and the current load information of each member BS, and, based thereon, determines whether to change the current master BS in the cloud cell, i.e., determines a handover. More specifically, the controller 910 determines whether there is a BS having the RSSI/CINR exceeding a threshold, among the channel quality values acquired from the channel quality report. If there is a specific BS having the RSSI/ CINR exceeding the threshold, the controller 910 determines whether the number of times that RSSI/CINR of the specific BS exceeded the threshold is greater than or equal to a predetermined number. The specific BS may be one of the member BSs, or one of BSs other than the member BSs. The controller 910 determines whetherthe specific BS is in overload state, by comparing the current load value acquired from the current load information received from the specific BS, with a threshold. If the specific BS is not in overload state, the controller 910 determines the specific BS as a master BS in the cloud cell. After the change, the controller 910 controls the transmitter 915 to send a result notification to the SS and the member BSs. The result notification may include information about a specific BS changed to a master BS, and information about the time at which the specific BS starts operating as a master BS.

In the case where the apparatus 900 operates as a slave BS according to the second exemplary embodiment of the present invention, the controller 910 waits for a result notification from the master BS. If the receiver 905 receives the result notification, the controller 910 recognizes that the apparatus 900 itself is changed to a master BS of the cloud cell. The apparatus 900 operates as a slave BS until the receiver 905 receives a confirmation message from the SS. Thereafter, if the receiver 905 receives the confirmation message from the SS, the controller 910 operates as a master BS as, for example, in FIG. 3.

Using the cloud cell configured as described above, exemplary embodiments of the present invention may increase the reliability of links having low signal strength in high-frequency bands and provide a plurality of excellent links to the SS, contributing to an increase in data throughput.

As is apparent from the foregoing description, a plurality of member BSs constituting a cloud cell may serve one SS, considering the characteristics of high-frequency bands to be used in the next-generation wireless communicationsystem, thereby increasing the reliability of links having low signal strength in high-frequency bands and providing a plurality of quality links to the SS, contributing to an increase in data throughput.

While the invention has been shown and described with reference to certain exemplary embodiments thereof, it will be the invention is defined by the appended claims.

## Claims

1. A method for providing a communication service by a master base station, BS, supporting connections with at least two BSs in a wireless communication system, the method comprising:
transmitting, to a member BS, a first control signal for a first communication with a first user equipment, UE;
performing the first communication with the first UE;
while performing the first communication with the first UE, determining (300) whether at least one new member BS is able to provide a service to the first UE based on measurements reported from the first UE;
said method being **characterized by**:
when the at least one new member BS is able to provide the service to the first UE, transmitting (305), to the first UE, information related to the at least one new member BS; and
while performing the first communication, receiving (500), from a master BS of a second UE, a second control signal for a second communication with the second UE, wherein the second control signal indicates that the master BS of the first UE is added as a new member BS for the second communication with the second UE.

2. The method of claim 1, further comprising:
maintaining a second connection with the at least one new member BS connected to the first UE; and
transmitting a control signal to the at least one new member BS.

3. The method of claim 1, wherein each of the master BS and the at least one new member BS connected to the UE performs a different role.

4. The method of claim 1, wherein the master BS is configured to transmit both of a control signal and data to the first UE, and is configured to transmit only data without transmitting a control signal to the second UE.

5. A method for providing a communication service by a member base station, BS, supporting connections with at least two BSs in a wireless communication system, the method comprising:
receiving (500), from a master BS of a first user equipment, UE, a first control signal for a first communication with the first UE;
performing the first communication with the first UE based on the first control signal;
the method being **characterized by**:
while performing the first communication, transmitting (305), to a member BS of a second UE, a second control signal for a second communication with the second UE, wherein the second control signal indicates that the master BS of the first UE is added as a new member BS for the second UE.

6. The method of claim 5, wherein each of the master BS and the member BS connected to the UE, performs a different role.

7. The method of claim 5, wherein the member BS is configured to transmit only data without transmitting a control signal to the first UE, and is configured to transmit both of a control signal and data to the second UE.

8. A master base station, BS, for providing a service to a user equipment, UE, supporting connections with at least two BSs in a wireless communication system, the master BS configured to perform the method according to any one of claims 1 to 4.

9. A member base station, BS, for providing a service to a user equipment, UE, supporting connections with at least two BSs in a wireless communication system, the member BS configured to perform the method according to any one of claims 5 to 7.

## Patentansprüche

1. Verfahren zum Bereitstellen eines Kommunikationsdienstes durch eine Master-Basisstation, BS, die Verbindungen mit mindestens zwei BS in einem drahtlosen Kommunikationssystem unterstützt, wobei das Verfahren Folgendes umfasst:
Übertragen eines ersten Steuersignals für eine erste Kommunikation mit einem ersten Benutzergerät, UE, an eine Mitglieds-BS;
Ausführen der ersten Kommunikation mit dem ersten UE;
während des Ausführens der ersten Kommunikation mit dem ersten UE, Bestimmen (300), ob mindestens eine neue Mitglieds-BS in der Lage ist, dem ersten UE einen Dienst bereitzustellen, basierend auf Messungen, die von dem ersten UE gemeldet werden; wobei das besagte Verfahren durch Folgendes gekennzeichnet ist:
wenn die mindestens eine neue Mitglieds-BS in der Lage ist, dem ersten UE den Dienst bereitzustellen, Übertragen (305) von Informationen an das erste UE, die sich auf die mindestens eine neue Mitglieds-BS beziehen; und
während des Ausführens der ersten Kommunikation, Empfangen (500) eines zweiten Steuersignals von einer Master-BS eines zweiten UE für eine zweite Kommunikation mit dem zweiten UE, wobei das zweite Steuersignal anzeigt, dass die Master-BS des ersten UE als eine neue Mitglieds-BS für die zweite Kommunikation mit dem zweiten UE hinzugefügt wird.

2. Verfahren nach Anspruch 1, welches ferner Folgendes umfasst:
Aufrechterhalten einer zweiten Verbindung mit der mindestens einen neuen Mitglieds-BS, die mit dem ersten UE verbunden ist; und
Übertragen eines Steuersignals an die mindestens eine neue Mitglieds-BS.

3. Verfahren nach Anspruch 1, wobei jede der Master-BS und der mindestens einen neuen Mitglieds-BS, die mit dem UE verbunden ist, eine andere Rolle spielt.

4. Verfahren nach Anspruch 1, wobei die Master-BS konfiguriert ist, um sowohl ein Steuersignal als auch Daten an das erste UE zu übertragen, und konfiguriert ist, um nur Daten zu übertragen, ohne ein Steuersignal an das zweite UE zu übertragen.

5. Verfahren zum Bereitstellen eines Kommunikationsdienstes durch eine Mitglieds-Basisstation, BS, die Verbindungen mit mindestens zwei BS in einem drahtlosen Kommunikationssystem unterstützt, wobei das Verfahren Folgendes umfasst:
Empfangen (500) eines ersten Steuersignals von einer Master-BS eines ersten Benutzergeräts, UE, für eine erste Kommunikation mit dem ersten UE;
Ausführen der ersten Kommunikation mit dem ersten UE basierend auf dem ersten Steuersignal; wobei das Verfahren **gekennzeichnet ist durch**:
während des Ausführens der ersten Kommunikation, Übertragen (305) eines zweiten Steuersignals an eine Mitglieds-BS eines zweiten UE für eine zweite Kommunikation mit dem zweiten UE, wobei das zweite Steuersignal anzeigt, dass die Master-BS des ersten UE als eine neue Mitglieds-BS für das zweite UE hinzugefügt wird.

6. Verfahren nach Anspruch 5, wobei jede der Master-BS und der Mitglieds-BS, die mit dem UE verbunden ist, eine andere Rolle spielt.

7. Verfahren nach Anspruch 5, wobei die Mitglieds-BS konfiguriert ist, um nur Daten zu übertragen, ohne ein Steuersignal an das erste UE zu übertragen, und konfiguriert ist, um sowohl ein Steuersignal als auch Daten an das zweite UE zu übertragen.

8. Master-Basisstation, BS, zum Bereitstellen eines Dienstes für ein Benutzergerät, UE, die Verbindungen mit mindestens zwei BS in einem drahtlosen Kommunikationssystem unterstützt, wobei die Master-BS konfiguriert ist, um das Verfahren nach einem der Ansprüche 1 bis 4 auszuführen.

9. Mitglieds-Basisstation, BS, zum Bereitstellen eines Dienstes für ein Benutzergerät, UE, die Verbindungen mit mindestens zwei BS in einem drahtlosen Kommunikationssystem unterstützt, wobei die Mitglieds-BS konfiguriert ist, um das Verfahren nach einem der Ansprüche 5 bis 7 auszuführen.

## Revendications

1. Procédé pour fournir un service de communication par une station de base, BS, maître prenant en charge des connexions avec au moins deux BS dans un système de communication sans fil, le procédé comprenant :
transmettre, à une BS affiliée, un premier signal de commande pour une première communication avec un premier équipement d'utilisateur, UE ;
effectuer la première communication avec le premier UE ;
tout en effectuant la première communication avec le premier UE, déterminer (300) si au moins une nouvelle BS affiliée peut fournir un service au premier UE sur la base de mesures rapportées à partir du premier UE ; ledit procédé étant **caractérisé par** :
lorsque l'au moins une nouvelle BS affiliée peut fournir le service au premier UE, transmettre (305), au premier UE, des informations relatives à l'au moins une nouvelle BS affiliée ; et
tout en effectuant la première communication, recevoir (500), à partir d'une BS maître d'un deuxième UE, un deuxième signal de commande pour une deuxième communication avec le deuxième UE, où le deuxième signal de commande indique que la BS maître du premier UE est ajoutée en tant que nouvelle BS affiliée pour la deuxième communication avec le deuxième UE.

2. Procédé selon la revendication 1, comprenant en outre :
maintenir une deuxième connexion avec l'au moins un nouvelle BS affiliée connectée au premier UE ; et
transmettre un signal de commande à l'au moins une nouvelle BS affiliée.

3. Procédé selon la revendication 1, où chacune de la BS maître et de l'au moins un nouvelle BS affiliée connectée à l'UE joue un rôle différent.

4. Procédé selon la revendication 1, où la BS maître est configurée pour transmettre à la fois un signal de commande et des données au premier UE, et est configurée pour transmettre uniquement des données sans transmettre un signal de commande au deuxième UE.

5. Procédé pour fournir un service de communication par une station de base, BS, affiliée prenant en charge des connexions avec au moins deux BS dans un système de communication sans fil, le procédé comprenant :
recevoir (500), à partir d'une BS maître d'un premier équipement d'utilisateur, UE, un premier signal de commande pour une première communication avec le premier UE ;
effectuer la première communication avec le premier UE sur la base du premier signal de commande ; le procédé étant **caractérisé par** :
tout en effectuant la première communication, transmettre (305), à une BS affiliée d'un deuxième UE, un deuxième signal de commande pour une deuxième communication avec le deuxième UE, où le deuxième signal de commande indique que la BS maître du premier UE est ajoutée en tant que nouvelle BS affiliée pour le deuxième UE.

6. Procédé selon la revendication 5, où chacune de la BS maître et de la BS affiliée connectée à l'UE, joue un rôle différent.

7. Procédé selon la revendication 5, où la BS affiliée est configurée pour transmettre uniquement des données sans transmettre de signal de commande au premier UE, et est configurée pour transmettre à la fois un signal de commande et des données au deuxième UE.

8. Station de base, BS, maître pour fournir un service à un équipement d'utilisateur, UE, prenant en charge des connexions avec au moins deux BS dans un système de communication sans fil, la BS maître étant configurée pour mettre en œuvre le procédé selon l'une quelconque des revendications 1 à 4.

9. Station de base, BS, affiliée pour fournir un service à un équipement d'utilisateur, UE, prenant en charge des connexions avec au moins deux BS dans un système de communication sans fil, la BS affiliée étant configurée pour mettre en œuvre le procédé selon l'une quelconque des revendications 5 à 7.
